(19) Europäisches Patentamt

European Patent Office

Office européen des brevets

(11) **EP 0 735 343 B1**

(12) **EUROPEAN PATENT SPECIFICATION**

(45) Date of publication and mention
of the grant of the patent:
**19.04.2000 Bulletin 2000/16**

(51) Int Cl.⁷: **G01B 5/10**, G01B 7/12,
G01B 21/12

(21) Application number: **95200800.1**

(22) Date of filing: **30.03.1995**

(54) **Diameter monitoring system**

Diameterüberwachungssystem

Dispositif de mesure de diamètres

(84) Designated Contracting States:
**BE ES**

(43) Date of publication of application:
**02.10.1996 Bulletin 1996/40**

(73) Proprietor: **N.V. BEKAERT S.A.**
**8550 Zwevegem (BE)**

(72) Inventors:
• **Samyn, Johan**
**B-8800 Roeselare (BE)**
• **Verhoeve, Filip**
**B-8520 Kuurne (BE)**

(74) Representative: **Messely, Marc, Ir. et al**
**N.V. Bekaert S.A.,**
**Bekaertstraat 2**
**8550 Zwevegem (BE)**

(56) References cited:
**DE-U- 8 810 854**          **FR-A- 636 294**
**GB-A- 1 206 722**

• **PATENT ABSTRACTS OF JAPAN vol. 8 no. 249 (M-338) ,15 November 1984 & JP-A-59 124657 (SHOWA DENSEN DENRAN KK) 18 July 1984,**
• **PATENT ABSTRACTS OF JAPAN vol. 6 no. 265 (P-165) ,24 December 1982 & JP-A-57 160009 (MITSUBISHI DENKI KK) 2 October 1982,**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

## Description

### Field of the invention.

The present invention relates to a method of continuously monitoring the diameter of an elongated element with circular cross-section which is wound upon a winding unit or unwound from a winding unit.
The invention further relates to a method of measuring the thickness of a coated layer on an elongated element.
The invention also relates to a monitoring device of the diameter of an elongated element that is wound upon a spool or unwound from a winding unit.
The elongated element can be a metal or a steel wire with a circular cross-section.

### Background of the invention.

In the field of manufacturing metal wires there is an urgent need for accurately and continuously monitoring the diameter of the wires. During the manufacturing a close watch on the diameter is necessary in order to determine whether or not the manufactured wire still falls within the required specifications and diameter measurement is often one of the only ways of detecting wear on the dies used to draw the wire.
Photoelectric apparatus and laser equipment are available as direct diameter measurement techniques. Both present, however, different drawbacks.
Photoelectric equipment is sensible to the ambient temperature and does not give accurate measurements in dusty environments.
Laser equipment is, although very accurate in optimal circumstances, an expensive investment and neither gives a solution in dusty environments.
GB-A-1 206 722 discloses a method of measuring the thickness of a strip which is wound on a drum. With each revolution of the drum the radius of the drum is increased by the mean thickness of the strip DE-U- 88 10 854 discloses a method of measuring the diameter of a yarn by winding the yarn in a number of windings adjacent to each other. The yarn diameter is determined from the number of revolutions and from the width of all the windings.

### Summary of the invention.

The present invention aims at providing for an indirect method of monitoring the diameter of elongated elements.
It is another object of the invention to provide for a continuous, on-line and automated method of monitoring the diameter of a wire.
It is also an object of the present invention to provide for a method and device for monitoring the diameter of a wire making only use of cheap and readily available sensors.
According to a first aspect of the present invention, there is provided for a method of continuously monitoring the diameter of an elongated element with circular cross-section which is wound upon or unwound from a winding unit, such as a spool or a bobbin or a reel.
The method comprises as steps:

(a) winding a length of an elongated element having a particular diameter on or from said winding unit with a number of angular rotations, each 360° rotation of the winding unit forming a winding, subsequent windings lying next to each other until a layer is formed, subsequent layers being formed above one another;
(b) measuring said length ;
(c) measuring said number of angular rotations ;
(d) using data processing means that produce from said measured length and from said measured number of angular rotations a signal that is indicative of said particular diameter.

The winding or unwinding is preferably done under a substantially constant tension. Varying winding tensions, however, can be taken into account by measuring such tensions and by appropriate software adaptation.
In a simple embodiment of the invention, an alarm is generated if, after a number of angular rotations N, the measured value L of said length is greater than the length value which should correspond to N.
In a more detailed embodiment, the data processing means preferably use previously determined tables (N, L) of the length L and of the number of angular rotations N. Each family of such tables corresponds to a type of winding unit or spool. This type of spool, or more accurately, the geometry of the spool is also put into the data processing means so that it is known which family of tables must be chosen for the calculation of the diameter of the elongated element.

According to a second aspect of the present invention, there is provided for a method of monitoring the thickness of a coated layer on an elongated element with circular cross-section.

This method comprising as steps:

(a) unwinding an elongated uncoated element;
(b) monitoring the diameter of the uncoated elongated element;
(c) coating said elongated element with a coated layer having a particular thickness;
(d) monitoring the diameter of said coated elongated element;
(e) determining the particular thickness of the coated layer from the signal indicative of the diameter of the uncoated elongated element and from the signal indicative of the diameter of the coated elongated element.

The monitoring of the diameter of the uncoated elongated element, or the monitoring of the diameter of the coated elongated element, or both, are done according to the method for monitoring the diameter according to the first aspect of the present invention.

According to a third aspect of the present invention, there is provided for a monitoring device of the diameter of an elongated element with circular cross-section that is wound upon a winding unit or that is unwound from a winding unit such as a spool. Each 360° rotation of the winding unit forms a winding. Subsequent windings lie next to each other until a layer is formed. Subsequent layers are formed above one another. The monitoring device comprises a first transducer producing a signal per unit of length of the elongated element which proceeds towards the spool or which withdraws from the spool. The monitoring device also comprises a second transducer producing a signal per unit of angular rotation of the spool. The monitoring device further comprises first memory means for memorizing the total units of wire length proceeding towards the spool during a time period and second memory means for memorizing the total units of angular rotation during the time period, and data processing means that produce in function of the data in memory a signal that is indicative of the diameter of the elongated element.

## Brief description of the drawings.

The invention will now be described into more detail with reference to the accompanying drawings wherein

- FIGURE 1 shows an outline of how the diameter is measured according to the first aspect of the present invention ;
- FIGURE 2 shows the way how the diameter of the elongated element is produced in the data processing means ;
- FIGURE 3 illustrates how the thickness of the coated layer of an elongated element can be measured;
- FIGURE 4 shows the geometrical data of a spool that are used in a mathematical calculation.

## Description of the preferred embodiments of the invention.

The invention is based on the principle that the number of angular rotations or rotations of a spool upon which an elongated element is wound or from which an elongated element is unwound, is dependent upon the length L of the elongated element, the diameter d of the elongated element, the geometry of the spool (more particularly, the diameter K of the spool core and the useable distance B between the spool flanges), and upon the way of winding (more particularly, the way in which the elongated element is piled up in layers on the spools). With a constant spool geometry and a constant way of winding, it must be possible to derive the diameter of the elongated element from the measurement of both the number of angular rotations of the spool and of the length of the elongated element. Both measurements, the number of angular rotations and the length, are simple to carry out by means of well known existing sensors.

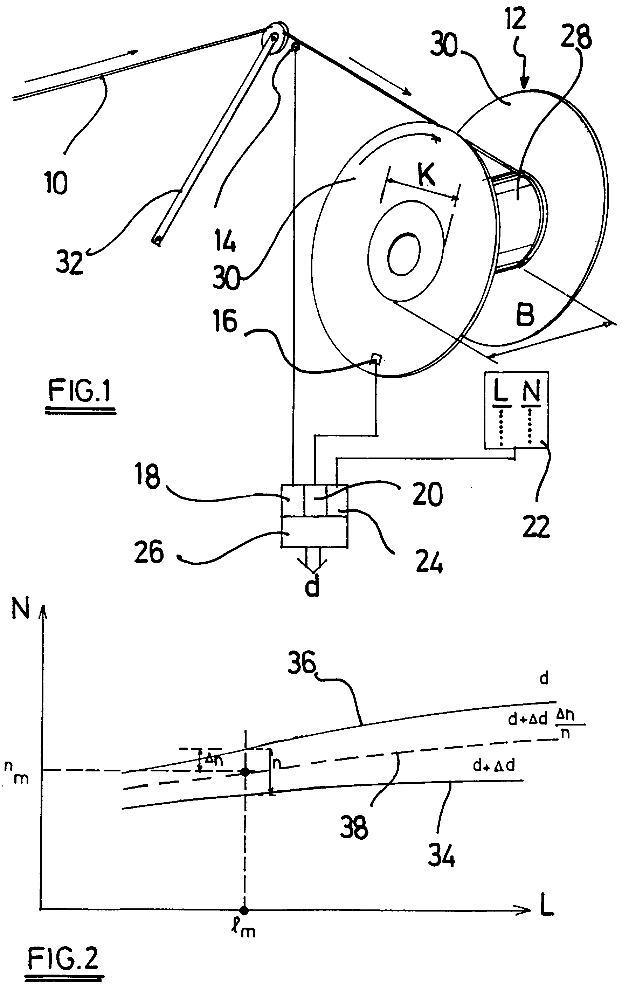

FIGURE 1 illustrates schematically how the diameter of an elongated element is measured according to the first aspect of the invention. An elongated element 10 is wound upon a spool 12. This spool can also be a bobbin or a reel. The length of the elongated element 10 is measured by means of a wheel that is in contact with the elongated element 10. The wheel is connected to a transducer 14 that produces a signal per unit of length passing via the wheel. An inductive sensor connected to a second transducer 16 produces a signal per unit of angular rotation of the spool 12. The units of wire length are totalized in first memory means 18, and the units of angular rotation are totalized in second memory means 20. A family of tables 22 (L,N) is put into third memory means 24. From all these inputs data processing means 26 produce the diameter of the elongated element. The family of tables 22 (L,N) is dependent upon the type of spool, and more particularly, upon the diameter K of the spool core 28 and upon the distance B between the spool flanges 30. For each type of spool, a particular previously registered family of tables (L,N) is put into the third memory means 24.

Preferably the elongated element 10 is wound upon spool 12 over a dancer mechanism 32 in order to maintain a substantially constant tension in the elongated element 10 during its winding. If winding tension increases, the dancer 32 rotates in clockwise direction and orders the winding motor (not shown) to slow down so that the winding tension decreases again. If winding tension decreases, the dancer 32 rotates in counterclockwise direction and orders the winding motor to speed up so that the winding tension increases.

FIGURE 2 shows two curves 34, 36 out of the family of tables (L,N). These curves give the number of angular rotations N (in ordinate) in function of the length L (in abscissa). Curve 34 corresponds to the greater diameter d + $\Delta$d, curve 36 to the smaller diameter d. These two curves 34, 36 have been previously registered by means of elongated elements 10 with calibrated diameters d + $\Delta$d and d. Application of the method according to the invention, gives us values $l_m$ of the length L and $n_m$ of the number of angular rotations N. This point ($l_m$, $n_m$) lies on a new curve 38 which corresponds to the diameter

$$d + (\Delta n/n)\Delta d$$

where n is the distance in ordinate between curves 34 and 36 and $\Delta$n is the distance in ordinate between curves 36 and 38. This is the diameter which is given by the data processing means 26.

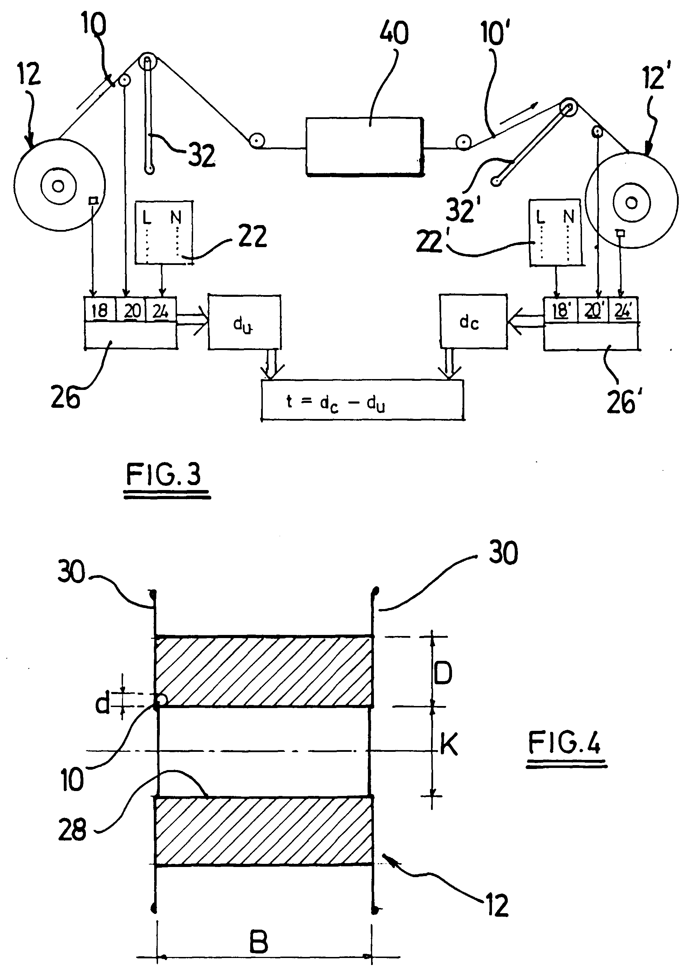

FIGURE 3 shows schematically how the thickness of the coated layer of an elongated element can be measured according to the second aspect of the present invention. In the left part of FIGURE 3, it is illustrated how the diameter $d_u$ of the uncoated element 10 is measured according to the first aspect of the present invention. The elongated element 10 is then coated with a particular layer, e.g. a nylon or a PCT coating in a coating installation 40, which results in a coated elongated element 10' which is wound upon a spool 12', shown in the right part of FIGURE 3. During this winding the diameter $d_c$ of the coated elongated element is measured, again according to the first aspect of the present invention. The reference numbers of the right part of FIGURE 3 all have quotes. The thickness t of the coated layer can then be determined by subtracting the diameter $d_u$ from the diameter $d_c$.

Referring to FIGURE 4, following mathematical relationship can be derived for the length $l$ in function of the number of angular rotations n and of the diameter d of the elongated element.

For the first layer of windings the length is:

$$l = \pi n_b [K + d]$$

where $n_b$ is the number of windings per layer.
For the second layer of windings the length is:

$$l = \pi n_b[(K + d) + 2K_h d]$$

where $K_h d$ is the increase in thickness per layer.
For the $n_h$th layer, the length is:

$$l = \pi n_b[(K + d) + 2(n_h - 1)K_h d]$$

where $n_h$ is the total number of layers.
Making the sum gives us the total length $l$ on the spool:

$$l = \pi \left[ \frac{K_h d^2}{K_b B} n^2 + (K + d - K_h d)n \right]$$

where $K_b$ is the filling degree of a layer and is equal to $\frac{nd}{n_h B}$.
Applying an error analysis to this mathematical formula and taking into account following relationships

$$D = d \times (1 + K_h n_h - K_h)$$

$$D \approx K_h d \times (n_h - 1)$$

$$D \approx K_h n_h d$$

gives us

$$\frac{\Delta d}{d} = \frac{K+D}{2D}\frac{\Delta l}{l} - \frac{K+2D}{2D}\frac{\Delta n}{n} - \frac{K}{2D}\frac{\Delta K}{K} - \frac{1}{2}\frac{\Delta B}{B} - \frac{1}{2}\left(\frac{\Delta \dfrac{K_h}{K_b}}{\dfrac{K_h}{K_b}}\right) \quad .$$

This means that the accuracy on the diameter is dependent upon the accuracy of the length, the accuracy of the number of angular rotations, the accuracy on the spool geometry and the accuracy on $K_h/K_b$, which depends upon the method of winding.

The length $l$, the number of angular rotations n and the spool geometry K and B can all be measured very accurately, which means that the accuracy on the diameter will largely depend upon the accuracy on $K_h/K_b$.

**Example:**

A first reference steel wire with a calibrated diameter of 0.250 mm has been wound upon a spool with a spool core diameter K equal to 98.000 mm and a distance B between the spool flanges equal to 190.00 mm.
A second comparison steel wire with a calibrated diameter of 0.245 mm has been wound upon the same spool.
Table 1 below gives the number of angular rotations n of the spool for determined values of the length $l$ of the wire.

Table 1

| length (m) | n reference (d = 0.250 mm) | n comparison (d = 0.245 mm) | difference in angular rotations | difference in angular rotations (%) |
|---|---|---|---|---|
| 1000 | 3205 | 3207 | 2 | 0.05 |
| 19000 | 52373 | 52647 | 274 | 0.52 |
| 49000 | 114701 | 115707 | 1005 | 0.88 |
| 79000 | 164902 | 166651 | 1749 | 1.06 |
| 109000 | 208120 | 210572 | 2452 | 1.18 |

This means that for a length of 109000 m, a difference of 5 micrometer in diameter results in a difference of 2452 number of angular rotations, or a difference of 491 number of angular rotations for a difference of only one micrometer. This means that the invention allows to obtain a very high resolution for the measurement of the diameter. It can also be derived from table 1 that this resolution increases accordingly as the length $l$ increases. So whereas the present invention allows to measure the diameter in an online way, its accuracy, or more precisely, its resolution increases accordingly as the winding operation proceeds.

**Comparison.**

The present invention has been compared with following alternative techniques for the measurement of the diameter of an elongated element:

(1) direct measurement with a laser diffraction apparatus CERSA;
(2) direct and manual measurement with a micrometer;
(3) indirect measurement by measuring the diameter of the full spool;
(4) indirect measurement by measuring the weight of the full spool and by measuring the weight of the empty spool.

Note that method (2) is only possible during standstills, and that methods (3) and (4) are only possible after completion of the winding process.
Table 2 below summarizes the results.

Table 2

| | standard deviation (μm) | standard deviation (μm) |
|---|---|---|
| | d = 0.200 mm | d = 0.250 mm |
| **invention (N,L)** | 0.71 | 0.70 |
| **CERSA laser** | 0.20 | 0.20 |
| **micrometer** | 1.7 | 1.1 |
| **diameter full spool** | 0.48 | 0.68 |
| **weight full spool** | 0.22 | - |

It can be derived from Table 2 that the highest level of reproducibility is obtained by means of the CERSA laser equipment and by means of the indirect measurement of the weight of the spool.

The invention method is comparable to the measurement of the diameter of the full spool, but has the advantage of allowing online measurements and of using much more simple sensors.

This high accuracy obtained by the invention method is remarkable, since, as has been explained above by the error analysis, the accuracy of the invention method is largely dependent upon the accuracy of the winding parameters. Prior to the invention, it was difficult, if not impossible, to predict that this dependency upon the accuracy of the winding parameters would not influence in a negative way the accuracy of the diameter measurement.

From the above description of the invention and from the concept of the invention itself, following advantages can be derived from the invention:

- a simple and cheap control and measurement system for the diameter of an elongated element is provided;
- a contactless measurement is provided;
- the measurement system is very stable in time;
- the sensors needed for the system are easy to install;
- the system requires no specific maintenance;
- once the previously registered tables (N,L) are put into the memory means no further calibration is necessary;
- a high output resolution is obtained;

- the system is flexible in that adaptation to other spools or types of elongated elements is easily and quickly done;
- the system allows for evaluation of the diameter during winding (not only at the end of the winding process);
- capability and reproducibility of the system is within the range of normal micrometer measurement;
- the system allows for easy integration in automatic control systems and in automated data gathering systems.

## Claims

1. A method of continuously monitoring the diameter of an elongated element with circular cross-section which is wound upon a winding unit,
   said method comprising as steps:

   (a) winding a length of an elongated element having a particular diameter on said winding unit with a number of angular rotations, each 360° rotation of the winding unit forming a winding, subsequent windings lying next to each other until a layer is formed, subsequent layers being formed above one another;
   (b) measuring said length ;
   (c) measuring said number of angular rotations ;
   (d) using data processing means that produce from said measured length and from said measured number of angular rotations a signal that is indicative of said particular diameter.

2. A method according to claim I wherein said winding is done under a substantially constant tension.

3. A method according to claim 1 wherein said data processing means use previously determined tables of length L and of number of angular rotations N, said tables varying according to each type of winding unit.

4. A method according to claim 3 wherein the type of winding unit is put into the data processing means.

**5.** A method according to claim 3 wherein the geometry of the winding unit is put into the data processing means.

**6.** A method of continuously monitoring the diameter of an elongated element with circular cross-section which is unwound from a winding unit,

said method comprising as steps:

   (a) unwinding a length of an elongated element having a particular diameter from said winding unit with a number of angular rotations, each 360° rotation of the winding unit forming a winding, subsequent windings lying next to each other until a layer is formed, subsequent layers being formed above one another;
   (b) measuring said length ;
   (c) measuring said number of angular rotations ;
   (d) using data processing means that produce from said measured length and from said measured number of angular rotations a signal that is indicative of said particular diameter.

**7.** A method of monitoring the thickness of a coated layer on an elongated element with circular cross-section, said method comprising as steps:

   (a) unwinding an elongated uncoated element;
   (b) monitoring the diameter of said uncoated elongated element;
   (c) coating said elongated element with a coated layer having a particular thickness ;
   (d) monitoring the diameter of said coated elongated element;
   (e) determining the particular thickness of the coated layer from a signal indicative of the diameter of the uncoated elongated element and from a signal indicative of the diameter of the coated elongated element;

wherein said monitoring of the diameter of said uncoated elongated element is done according to claim 6 or said monitoring of the diameter of said coated elongated element is done according to claim 1.

**8.** A device for continuously monitoring the diameter of an elongated element with circular cross-section that is wound to a winding unit, each 360° rotation of the winding unit forming a winding, subsequent windings lying next to each other until a layer is formed, subsequent layers being formed above one another, said monitoring device comprising a first transducer producing a signal per unit of length of said elongated element proceeding towards said winding unit, a second transducer producing a signal per unit of angular rotation of said winding unit, first memory means for memorizing the total units of wire length proceeding towards a winding unit during a time period, second memory means for memorizing the total units of angular rotation during said time period, and data processing means that produce in function of the data in memory a signal that is indicative of the diameter of the elongated element.

**9.** A monitoring device according to claim 8, wherein said monitoring device further comprises third memory means for memorizing previously determined tables L,N of length L and of number of angular rotations N, said tables varying according to each type of winding unit.

**10.** A monitoring device according to claim 8, wherein said monitoring device further comprises third memory means for memorizing the geometry of the winding unit.

**11.** A device for continuously monitoring the diameter of an elongated element with circular cross-section that is unwound from a winding unit, each 360° rotation of the winding unit forming a winding, subsequent windings lying next to each other until a layer is formed, subsequent layers being formed above one another, said monitoring device comprising a first transducer producing a signal per unit of length of said elongated element withdrawing from said winding unit, a second transducer producing a signal per unit of angular rotation of said winding unit, first memory means for memorizing the total units of wire length proceeding from a winding unit during a time period, second memory means for memorizing the total units of angular rotation during said time period, and data processing means that produce in function of the data in memory a signal that is indicative of the diameter of the elongated element.

**Patentansprüche**

**1.** Verfahren zu der ununterbrochenen Überwachung von dem Durchmesser eines verlängerten Elements mit rundem Querschnitt, das auf einer Aufspulmaschine aufgewickelt wird, dadurch gekennzeichnet, dass es nachstehende Schritte enthält:

(a) Aufwicklung von einem verlängerten Element mit bestimmter Länge und spezifischem Durchmesser auf genannter Aufspulmaschine mittels einer Zahl von Umdrehungen, wobei jede 360°-Umdrehung der Aufspulmaschine eine Einzelwicklung bildet und jede nachfolgende Einzelwicklung neben die vorige gelegt wird, so dass sich diese Einzelwicklungen zu einer Schicht zusammenfügen und sich so weitere Schichten eine über die andere bilden ;
(b) Abmessung obenerwähnter Länge ;
(c) Ermittlung der Zahl von obengenannten Umdrehungen ;
(d) Anwendung von einem Datenverarbeitungsgerät, das aus obenerwähnter abgemessener Länge und obenerwähnter ermittelter Zahl der Umdrehungen ein Signal erstellt, das den genannten spezifischen Durchmesser angibt.

2. Verfahren nach Anspruch 1, dadurch gekennzeichnet, dass genanntes Aufspulen unter wesentlich gleichbleibender Spannung erfolgt.

3. Verfahren nach Anspruch 1, dadurch gekennzeichnet, dass obenerwähntes Datenverarbeitungsgerät je nach Aufspulmaschinentyp unterschiedliche vorgegebene Tabellen der Länge L und der Umdrehungszahlen N benutzt.

4. Verfahren nach Anspruch 3, dadurch gekennzeichnet, dass der Aufspulmaschinentyp in das Datenverarbeitungsgerät eingegeben wird.

5. Verfahren nach Anspruch 3, dadurch gekennzeichnet, dass die Geometrie der Aufspulmaschine in das Datenverarbeitungsgerät eingegeben wird.

6. Verfahren zu der ununterbrochenen Überwachung von dem Durchmesser eines verlängerten Elements mit rundem Querschnitt, das von einer Aufspulmaschine abgewickelt wird, dadurch gekennzeichnet, dass es nachstehende Schritte enthält:

(a) Abwicklung eines verlängerten Elements mit bestimmter Länge und spezifischem Durchmesser von der genannten Aufspulmaschine mittels einer Zahl von Umdrehungen, wobei jede 360°-Umdrehung der Aufspulmaschine eine Einzelwicklung bildet und jede nachfolgende Einzelwicklung neben die vorige gelegt wird, so dass sich diese Einzelwicklungen zu einer Schicht zusammenfügen und sich so weitere Schichten eine über die andere bilden ;
(b) Abmessung obenerwähnter Länge ;
(c) Ermittlung obengenannter Zahl der Umdrehungen ;
(d) Anwendung von einem Datenverarbeitungsgerät, das aus genannter abgemessener Länge und genannter ermittelter Zahl der Umdrehungen ein Signal erstellt, das den genannten spezifischen Durchmesser angibt.

7. Verfahren zu der Überwachung der Schichtdicke an einem verlängerten Element mit rundem Querschnitt, dadurch gekennzeichnet, dass es folgende Schritte enthält:

(a) Abwicklung eines verlängerten unbeschichteten Elements ;
(b) Überwachung des Durchmessers des obenerwähnten unbeschichteten verlängerten Elements ;
(c) Beschichtung des genannten verlängerten Elements mit einer Schicht spezifischer Dicke ;
(d) Überwachung des Durchmessers von dem genannten beschichteten verlängerten Element;
(e) Bestimmung der spezifischen Schichtdicke, ausgehend von einem den Durchmesser des verlängerten unbeschichteten Elements angebenden Signal und von einem den Durchmesser des verlängerten beschichteten Elements angebenden Signal,

wobei genannte Überwachung des Durchmessers von dem genannten verlängerten unbeschichteten Element nach Anspruch 6 beziehungsweise genannte Überwachung des Durchmessers vom genannten verlängerten beschichteten Element nach Anspruch 1 erfolgt.

8. Ein Gerät zu der ununterbrochenen Überwachung von dem Durchmesser eines verlängerten Elements mit rundem Querschnitt, das auf einer Aufspulmaschine aufgewickelt wird, wobei jede 360°-Umdrehung der Aufspulmaschine eine Einzelwicklung bildet und jede nachfolgende Einzelwicklung neben der vorigen gelegt wird, so dass sich diese Einzelwicklungen zu einer Schicht zusammenfügen und sich weitere Schichten eine über die andere bilden, dadurch gekennzeichnet, dass es besteht aus

- einem ersten Transducer, der je Längeneinheit des genannten verlängerten Elements, die auf der Aufspulmaschine aufgewickelt wird, ein Signal hervorbringt,
- einem zweiten Transducer, der je Einheit der Umdrehung von der genannten Aufspulmaschine ein Signal hervorbringt,
- einem ersten Speichergerät zur Speicherung der Gesamtzahl der Drahtlängeneinheiten, die innerhalb eines bestimmten Zeitraumes auf einer Aufspulmaschine aufgewickelt werden;
- einem zweiten Speicherapparat zur Speicherung der Gesamtzahl der Umdrehungen während des genannten Zeitraumes und
- einem Datenverarbeitungsgerät, das auf Grund der gespeicherten Daten ein Signal erstellt, das den Durchmesser des verlängerten Elements angibt.

9. Überwachungsgerät nach Anspruch 8, dadurch gekennzeichnet, dass es zusätzlich einen dritten Speicherapparat enthält, zur Speicherung von vorgegebenen L- und N-Tabellen der Länge L bzw. der Zahl der Umdrehungen N , bei dem die genannten Tabellen je nach Aufspulmaschinentyp unterschiedliche Werte enthalten.

10. Überwachungsgerät nach Anspruch 8, dadurch gekennzeichnet das es einen dritten Speicherapparat enthält, zur Speicherung der Geometrie der Aufspulmaschine.

11. Ein Gerät zu der ununterbrochenen Überwachung von dem Durchmesser eines verlängerten Elements mit rundem Querschnitt, das von einer Aufspulmaschine abgewickelt wird, wobei jede 360°-Umdrehung der Aufspulmaschine eine Einzelwicklung bildet und jede nachfolgende Einzelwicklung neben die vorige gelegt wird, so dass sich diese Einzelwicklungen zu einer Schicht zusammenfügen und sich weitere Schichten eine über die andere bilden, dadurch gekennzeichnet, dass es besteht aus

- einem ersten Transducer, der je Längeneinheit, um die das genannte verlängerte Element von der genannten Aufspulmaschine abgewickelt wird, ein Signal hervorbringt,
- einem zweiten Transducer, der je Einheit der Umdrehung von der genannten Aufspulmaschine ein Signal hervorbringt,
- einem ersten Speichergerät zur Speicherung der Gesamtzahl der Drahtlängeneinheiten, die innerhalb eines bestimmten Zeitraumes von einer Aufspulmaschine abgewickelt werden;
- einem zweiten Speicherapparat zur Speicherung der Gesamtzahl der Umdrehungen während des genannten Zeitraumes und
- einem Datenverarbeitungsgerät, das auf Grund der gespeicherten Daten ein Signal erstellt, das den Durchmesser des verlängerten Elements angibt.

**Revendications**

1. Une méthode de contrôle continu du diamètre d'un objet allongé à section circulaire, qui est enroulé sur une enrouleuse, la méthode en question comprenant les étapes suivantes :

(a) enroulement d'une longueur donnée d'un objet allongé possédant un diamètre particulier sur ladite enrouleuse avec un certain nombre de rotations angulaires, chaque rotation de 360° de l'enrouleuse formant une spire, les spires successives se posant l'une à côté de l'autre de manière à former une couche, les couches successives étant formées l'une au-dessus de l'autre ;
(b) mesure de ladite longueur ;
(c) mesure dudit nombre de rotations angulaires ;
(d) utilisation de moyens de traitement de données qui produisent à partir de ladite longueur mesurée et dudit nombre mesuré de rotations angulaires un signal qui est déterminant pour ledit diamètre particulier.

2. Une méthode conforme à la revendication 1 où ledit enroulement se fait sous une tension substantiellement constante.

3. Une méthode conforme à la revendication 1 où lesdits moyens de traitement de données utilisent des tables de longueur L et de rotations angulaires N établies préalablement, lesdites tables étant différentes pour chaque type d'enrouleuse.

**4.** Une méthode conforme à la revendication 3 où le type d'enrouleuse est introduit dans les moyens de traitement de données.

**5.** Une méthode conforme à la revendication 3 où la géométrie de l'enrouleuse est introduite dans les moyens de traitement de données.

**6.** Une méthode de contôle continu du diamètre d'un objet allongé à section circulaire, qui est déroulé d'une enrouleuse, ladite méthode comprenant les étapes suivantes :

(a) déroulement d'une certaine longueur d'un l'objet allongé possédant un diamètre particulier d'une enrouleuse avec un certain nombre de rotations angulaires, chaque rotation de 360° de l'enrouleuse formant une spire, les spires successives se posant l'une à côté de l'autre jusqu'à former une couche, les couches successives se formant l'une au-dessus de l'autre ;
(b) mesure de ladite longueur ;
(c) mesure dudit nombre de rotations angulaires ;
(d) utilisation de moyens de traitement de données qui produisent à partir de ladite longueur mesurée et dudit nombre de rotations angulaires un signal qui est déterminant pour ledit diamètre particulier.

**7.** Une méthode de contrôle de l'épaisseur d'une couche de revêtement sur un objet allongé à section circulaire, ladite méthode comprenant les étapes suivantes :

(a) déroulement d'un objet allongé sans revêtement ;
(b) contrôle du diamètre dudit objet allongé sans revêtement ;
(c) application d'une couche de revêtement possédant une épaisseur particulière sur ledit objet allongé ;
(d) contrôle du diamètre dudit objet allongé recouvert d'un revêtement ;
(e) détermination de l'épaisseur particulière de la couche de revêtement à partir d'un signal déterminant le diamètre de l'objet allongé sans revêtement et d'un signal déterminant le diamètre de l'objet allongé recouvert d'un revêtement ;

où ledit contrôle du diamètre dudit objet allongé sans revêtement se fait conformément à la revendication 6, et ledit contrôle du diamètre dudit objet allongé recouvert d'un revêtement conformément à la revendication 1.

**8.** Un appareil destiné au contrôle continu du diamètre d'un objet allongé à section circulaire, qui est enroulé sur une enrouleuse, chaque rotation de 360° de l'enrouleuse formant une spire, les spires successives se posant l'une à côté de l'autre jusqu'à former une couche, les couches successives se formant l'une au-dessus de l'autre, ledit appareil de contrôle comprenant un capteur produisant un signal par unité de longueur dudit objet allongé se dirigeant vers ladite enrouleuse, puis un second capteur produisant un signal par unité de rotation angulaire de ladite enrouleuse, une premièr mémoire pour la mémorisation du total des unités de longueur du fil allant vers une enrouleuse pendant un laps de temps, une seconde mémoire pour la mémorisation du total des unités de rotation angulaire durant ledit laps de temps, et des moyens de traitement de données qui, en fonction des données dans la mémoire, produisent une signal qui est déterminant pour le diamètre de l'objet allongé.

**9.** Un appareil de contrôle conforme à la revendication 8, où ledit appareil de contrôle comprend en outre une troisième mémoire pour la mémorisation des tables L, N de la longueur L et du nombre de rotations angulaires N préalablement établies, lesdites tables étant différentes pour chaque type d'enrouleur.

**10.** Un appareil de contrôle conforme à la revendication 8, où ledit appareil de contrôle comprend en plus une troisième mémoire pour la mémorisation de la géométrie de l'enrouleur.

**11.** Un appareil destiné au contrôle continu du diamètre d'un objet allongé à section circulaire qui est déroulé d'une enrouleuse, chaque rotation de 360° de l'enrouleuse formant une spire, les spires successives se posant l'une à côté de l'autre jusqu'à former une couche, les couches successives se formant l'une au-dessus de l'autre, ledit appareil de contrôle comprenant un premier capteur produisant un signal par unité de longueur dudit objet allongé déroulée de ladite enrouleuse, un second capteur produisant un signal par unité de rotation angulaire de ladite enrouleuse, une première mémoire pour la mémorisation du total des unités de longueur du fil venant d'une enrouleuse pendant un laps de temps, une seconde mémoire pour la mémorisation du total des unités de rotation angulaire durant ledit laps de temps, et des moyens de traitement de données qui produisent, en fonction des données dans la mémoire, un signal qui est déterminant pour le diamètre de l'objet allongé.

FIG.1

FIG.2

FIG.3

FIG.4

$$t = d_c - d_u$$